Europäisches Patentamt

European Patent Office

Office européen des brevets

(19)

(11) Veröffentlichungsnummer: **0 120 100**
**A1**

(12) # EUROPÄISCHE PATENTANMELDUNG

(21) Anmeldenummer: **83102848.5**

(22) Anmeldetag: **23.03.83**

(51) Int. Cl.³: **B 60 N 3/10**
**B 60 R 7/04**

(43) Veröffentlichungstag der Anmeldung:
**03.10.84 Patentblatt 84/40**

(84) Benannte Vertragsstaaten:
**AT BE CH DE FR GB IT LI LU NL SE**

(71) Anmelder: **Tadeusz, Kilian**
**Nienredder 14b**
**D-2000 Hamburg 54(DE)**

(72) Erfinder: **Tadeusz, Kilian**
**Nienredder 14b**
**D-2000 Hamburg 54(DE)**

(74) Vertreter: **Glawe, Delfs, Moll & Partner Patentanwälte**
**Postfach 26 01 62 Liebherrstrasse 20**
**D-8000 München 26(DE)**

(54) **Dosenbehälter für Kraftfahrzeuge.**

(57) Ein erstes flächiges Klettenelement (A) kann an einer Wand oder einer sonstigen Fläche z.B. des Kraftfahrzeuges befestigt werden. Ein nach oben offener Behälter (B,C), der die Dose aufnimmt, ist mit einem entsprechenden Klettenband an seiner Außenseite versehen. Wird der Behälter (B,C) mit seinem Klettenband gegen das erste Klettenelement (A) gedrückt, so haftet er an der gewünschten Stelle und kann von dort leicht wieder gelöst werden.

EP 0 120 100 A1

./...

Croydon Printing Company Ltd.

Teil A

$B_5$

$B_4$

$B_3$

$B_1$

$B_2$

Teil B

Teil A

Teil B

<u>Beschreibung des Dosenbehälters für Kraftfahrzeuge</u>

Die Erfindung bezieht sich auf eine Anordnung zum Abstellen und Aufrechthalten von Dosen oder ähnlichen Behältern für Getränke, insbesondere in Kraftfahrzeugen.

In Kraftfahrzeugen hat man häufig Schwierigkeiten, besonders als Alleinreisender, eine Dose oder ein ähnliches Gefäß aufzubewahren, wenn es nicht mehr verschlossen ist. Infolge der ständigen Erschütterungen und der horizentalen Kräfte beim Beschleunigen und beim Abbremsen, sowie in Kurven, kommt es immer wieder vor, daß der Inhalt verschüttet wird. Häufig kommen noch weitere Unannehmlichkeiten hinzu, wie unangenehmer Geruch, Klebrigkeit (bei zuckerhaltigen Getränken) sowie beschmutzte bis hin zu verdorbenen Fußbodenbelägen.

Der Erfindung liegt die Aufgabe zugrunde, eine Anordnung der obengenannten Art vorzuschlagen, die insbesondere in Kraftfahrzeugen ohne besondere Montage angebracht werden kann, und die dennoch bei den üblichen Erschütterungen und horizentalen Kräften eine Dose mit flüssigem Inhalt oder ein ähnliches Gefäß sicher hält.

Bisher wurde noch keine Lösung gefunden, die den obengenannten Anforderungen genügt.

Im folgenden wird die Erfindung anhand einer darstellenden Zeichnung näher erläutert.

Die Erfindung besteht aus zwei Teilen. Teil A umfaßt zwei Klettenbandstreifen, die mit Hilfe eines Klebers im Innern des Kraftfahrzeuges T-förmig befestigt werden. Teil B ist aus Kunststoff hergestellt, der in eine bestimmte Form gepreßt wurde. Diese Form setzt sich zusammen aus einer

kreisförmigen Bodenplatte ($B_1$), einem unteren Ring ($B_2$), auf dem in gleichmäßigem Abstand senkrecht mehrere Streben ($B_3$) stehen und einem darüberliegenden oberen Ring ($B_4$) mit einer besonderen Abflachung ($B_5$). An der beschriebenen Abflachung ($B_5$) und an dem senkrecht darunterliegenden Streben sind T-förmig zwei Streifen Klettenband geklebt. An dieser Stelle werden Teil A und Teil B zusammengefügt.

Aufgrund der besonderen Eigenschaften des Klettenbandes. kann Teil B, sofern er nicht benötigt wird, jederzeit abgetrennt und bei Bedarf leicht wieder angebracht werden.

Teil B kann auch die Form eines an einer Seite abgeflachten Zylinders mit einer Bodenplatte besitzen (C).

**0120100**

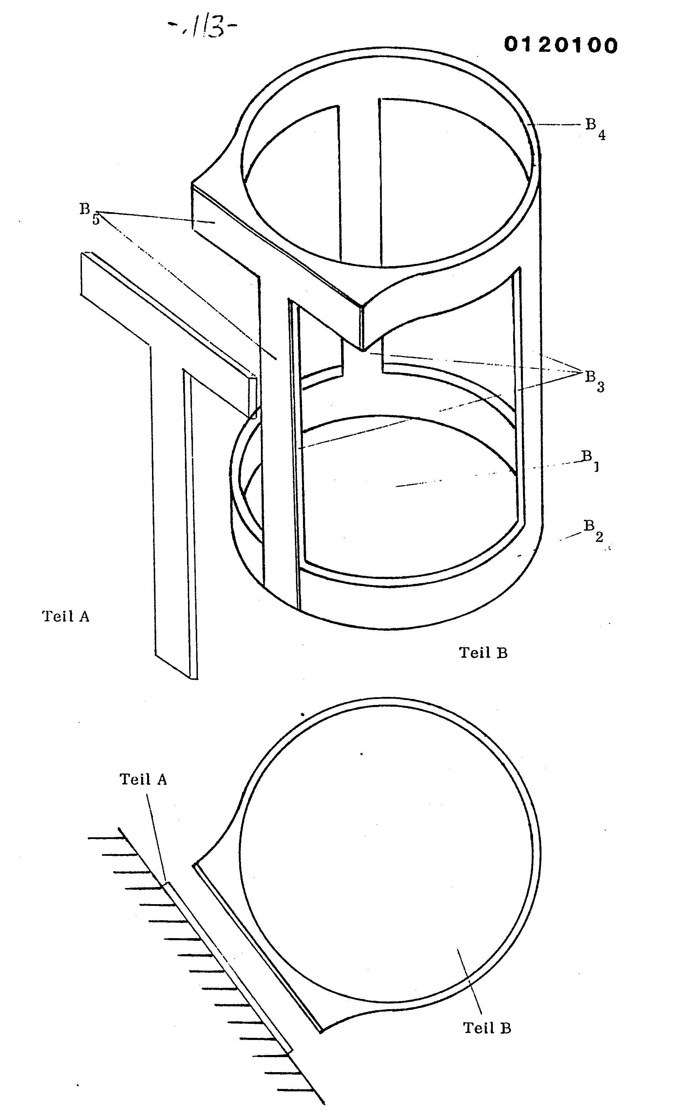

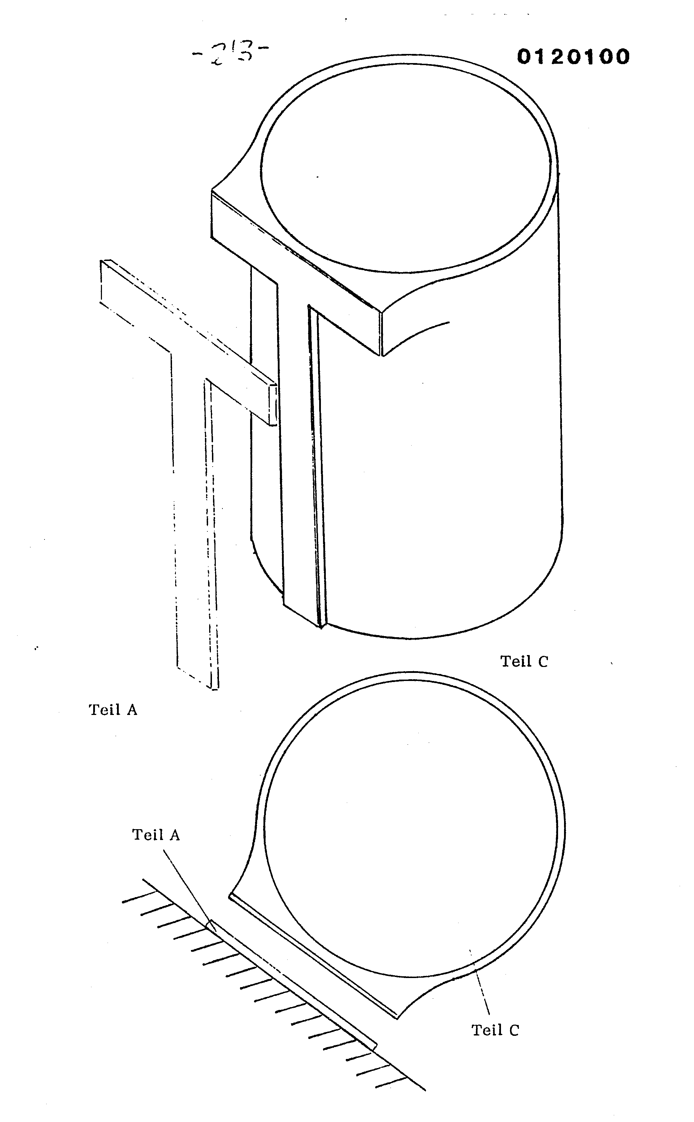

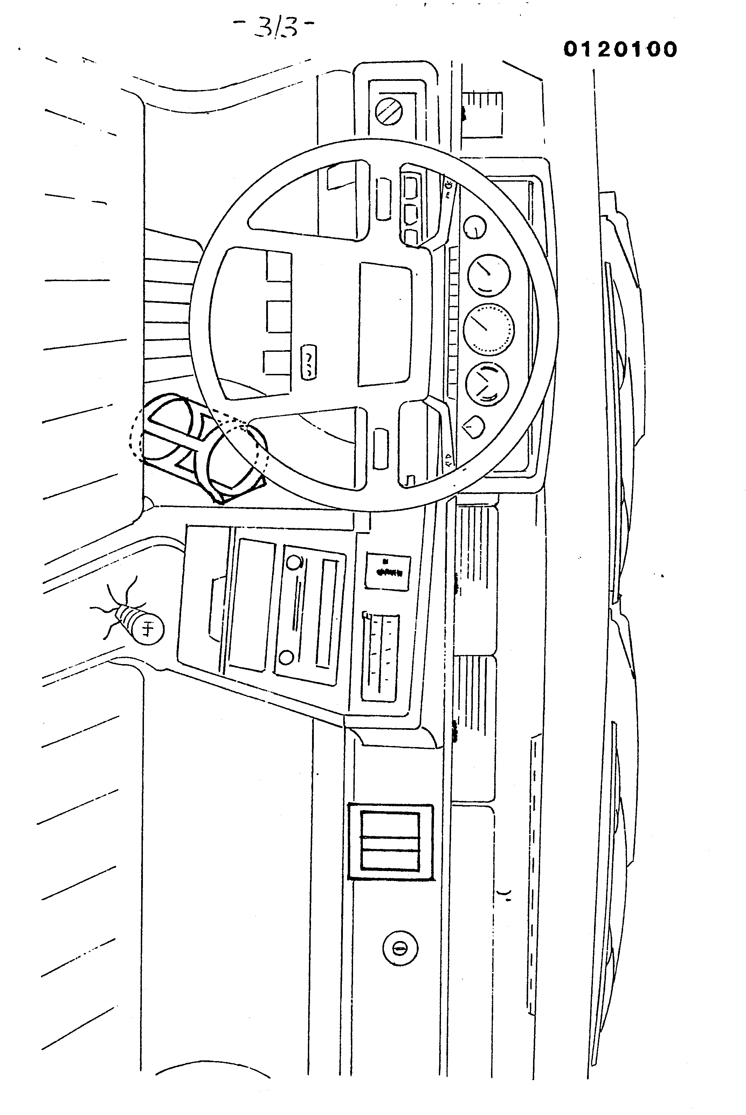

## Patentansprüche

Der Dosenbehälter für Kraftfahrzeuge, bestehend aus dem eigentlichen Behälter für Dosen (Teil B bzw. C) oder ähnliche Gefäße für Getränke und einer Befestigungsvorrichtung aus Klettenband (Teil A), das an die Innenseite des Kraftfahrzeugs geklebt wird, ist gekennzeichnet dadurch, daß durch die Verwendung von Klettenband, der Behälter von seiner Befestigungsvorrichtung jederzeit leicht abgenommen und wieder zusammengefügt werden kann. Ferner ist die Erfindung dadurch gekennzeichnet, daß der innere Durchmesser des Behälters, genau wie seine Länge so bemessen sind, daß die Dose leicht herauszunehmen ist, aber während der Fahrt rutschsicher festgehalten wird.

Weiterhin ist der Dosenbehälter für Kraftfahrzeuge durch sein geringes Gewicht, bedingt durch die Verwendung von Kunststoff als eigentliches Material des Behälters gekennzeichnet.

0120100

$B_4$

$B_5$

$B_3$

$B_1$

$B_2$

Teil A

Teil B

Teil A

Teil B

- 213 -

0120100

Teil C

Teil A

Teil A

Teil C

Europäisches
Patentamt

**EUROPÄISCHER RECHERCHENBERICHT**

**0120100**
Nummer der Anmeldung

EP 83 10 2848

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | CH-A- 387 473 (WULFMEYER) * Insgesamt * | 1,3 | B 60 N 3/10 B 60 R 7/04 |
| A | CH-A- 363 251 (FRITZ) * Insgesamt * | 7 | |
| A | DE-A-2 930 855 (SCHIMMELPFENNIG) * Insgesamt * | 4-7 | |
| A | FR-A-2 476 560 (TRAVEL-DRINK) * Insgesamt * | 1,4,5, 7 | |
| A | DE-A-2 542 567 (BÖHRER) * Insgesamt * | | RECHERCHIERTE SACHGEBIETE (Int. Cl. ³) |
| A | US-A-2 289 701 (ENGEL) | | B 60 N B 60 R |
| A | US-A-2 698 155 (BOWMAN) | | |

Der vorliegende Recherchenbericht wurde für alle Patentansprüche erstellt.

| Recherchenort DEN HAAG | Abschlußdatum der Recherche 22-11-1983 | Prüfer HEROUAN E. |
|---|---|---|